# EUROPÄISCHE PATENTSCHRIFT

(11) **EP 3 597 462 B1**
(45) Veröffentlichungstag und Bekanntmachung des Hinweises auf die Patenterteilung: **19.04.2023**
(21) Anmeldenummer: 19186546.8
(22) Anmeldetag: 16.07.2019
(51) Int. Cl.: B60K 1/00, H02K 5/16, F16C 35/04, H02K 5/15, F16C 35/00, H02K 7/116

(54) **ELEKTRISCHE FAHRZEUGACHSENVORRICHTUNG**
ELECTRIC VEHICLE AXLE DEVICE
DISPOSITIF D'ESSIEU DE VÉHICULE ÉLECTRIQUE

(30) Priorität: 18.07.2018 DE 102018211938
(43) Veröffentlichungstag der Anmeldung: 22.01.2020
(73) Patentinhaber: Robert Bosch GmbH, 70442 Stuttgart (DE)
(72) Erfinder: Nguyen, Ngoc-Thach, 74189 Weinsberg (DE); Krastev, Ianislav, 71638 Ludwigsburg (DE); Goerdeler, Michael Wolfgang, 71034 Boeblingen (DE)

(56) Entgegenhaltungen:
- EP-A1- 0 471 876
- DE-A1- 19 816 699
- DE-A1-102014 217 125
- DE-A1-102015 226 755
- JP-B2- 6 315 953
- US-A1- 2015 076 972

## Beschreibung

Die Erfindung betrifft eine elektrische Fahrzeugachsenvorrichtung für ein Kraftfahrzeug.

### Stand der Technik

Elektrische Fahrzeugachsenvorrichtungen für Kraftfahrzeuge weisen herkömmlicherweise eine elektrische Maschine, eine Leistungselektronik zum Ansteuern der elektrischen Maschine und ein mit der elektrischen Maschine gekoppeltes Getriebe auf.

Ferner weist die elektrische Fahrzeugachsenvorrichtung ein Gehäuse auf, in welchem zumindest die elektrische Maschine und das Getriebe aufgenommen sind. Das Getriebe weist eine Mehrzahl von Lagern auf, welche durch eine Positioniereinrichtung zu einem an dem Gehäuse befestigten Lagerdeckel positioniert sind.

Herkömmlicherweise ist die Positioniereinrichtung durch ein Paar von Passstiften bzw. Passbolzen ausgebildet, die in einem Randbereich des Gehäuses beliebig angeordnet sind und in senkrechtem Winkel vom Gehäuse abstehen. Der auf das Gehäuse aufzusetzende Deckel weist entsprechende Bohrungen auf, in welche die Passstifte bzw. Passbolzen des Gehäuses einfügbar sind.

Eine solche Positioniereinrichtung kann jedoch keine genaue Positionierung bzw. Zentrierung der Lager bewirken, da gewisse axiale und/oder radiale Versätze entstehen können.

DE 10 2013 204 776 A1 offenbart eine elektrische Fahrzeugachsenvorrichtung, welche wenigstens eine Fahrzeugachse aufweist, an welcher Fahrzeugräder anbringbar sind, und wobei die elektrische Fahrzeugachsenvorrichtung ein Getriebe aufweist, welches mit der Fahrzeugachse verbunden ist. Ferner weist die Fahrzeugachsenvorrichtung einen Elektromotor auf, welcher mit dem Getriebe gekoppelt ist, zur Übertragung eines Drehmoments auf die Fahrzeugachse und die mit der Fahrzeugachse verbundenen Fahrzeugräder. Überdies weist die elektrische Fahrzeugachsenvorrichtung eine Leistungselektronik auf, wobei die Leistungselektronik einen Inverter aufweist, welcher mit dem Elektromotor verbunden ist, zum Speisen des Elektromotors mit elektrischer Energie.

Abseits von Fahrzeugachsenvorrichtungen kennt man mit Blick auf Stellantriebe in Kraftfahrzeugen die DE 2015 226 755 A1, welche einen Elektromotor mit einem Polgehäuse und einer mechanischen Schnittstelle zur zumindest mittelbaren Befestigung des Polgehäuses an einem Getriebegehäuse betrifft. Dort ist es vorgesehen, das Polgehäuse als gerolltes Polgehäuse auszubilden, und die mechanische Schnittstelle durch ein von dem Polgehäuse separates Bauteil in Form eines Lagerdeckels zu bilden, der mit dem Polgehäuse verbunden ist.

Weiterhin sind entsprechende Vorrichtungen bekannt aus der US 2015/076972 A1, der DE 10 2014 217 125 A1, der EP 0 471 876 A1 und der JP 6 315 953 B2.

Es besteht somit ein Bedarf, eine elektrische Fahrzeugachsenvorrichtung vorzusehen, welche eine genauere Positionierung der Lager bzw. Achsen ermöglicht.

### Offenbarung der Erfindung

Die vorliegende Erfindung schafft eine elektrische Fahrzeugachsenvorrichtung für ein Kraftfahrzeug, gemäß dem Gegenstand des unabhängigen Anspruchs 1. Weite mögliche Ausführungsformen der Erfindung bilden den Gegenstand der unabhängigen Ansprüche.

Eine Idee der vorliegenden Erfindung ist es, durch Vorsehen der Positioniereinrichtung an der Oberfläche des Gehäuses in Form von ersten dreidimensionalen Fügebereichen und einer Innenseite des Lagerdeckels durch zweite dreidimensionale Fügebereiche, wobei die ersten dreidimensionalen Fügebereiche des Gehäuses an deren Boden und die zweiten dreidimensionalen Fügebereiche des Lagerdeckels formschlüssig zusammengefügt sind, eine verbesserte Positionierung bzw. Zentrierung der Lager zu ermöglichen, da die jeweiligen Fügebereiche des Gehäuses und des Lagerdeckels nunmehr Flächenkontakt bzw. Ringflächenkontakt gegenüber einem herkömmlichen Punkt- oder Linienkontakt aufweisen.

Aufgrund des Deckel- und Topf-Sitzes, welcher aufgrund seiner Geometrie einen radialen Formschluss bildet und derart ausgebildet ist, dass dessen Mittelpunkt eine neue Achse bildet, die mit beispielsweise einer Motorachse bzw. einer Lagerachse am Deckel fluchtet kann so eine genauere achstreue Positionierung der Lager ermöglicht werden.

Vorteilhafte Ausführungsformen und Weiterbildungen ergeben sich aus den Unteransprüchen sowie aus der Beschreibung unter Bezugnahme auf die Figuren.

Die beschriebenen Ausgestaltungen und Weiterbildungen lassen sich beliebig miteinander kombinieren (im Rahmen der Erfindung, wie sie in den beigefügten Ansprüchen definiert ist).

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Die Erfindung ist nur durch den Umfang der beigefügten Ansprüche begrenzt.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: eine Seitenansicht einer elektrischen Fahrzeugachsenvorrichtung mit abgenommenem Lagerdeckel gemäß einer ersten Ausführungsform der Erfindung;
- Fig. 2: eine Querschnittsansicht des an einem Gehäuse der elektrischen Fahrzeugachsenvorrichtung befestigten Lagerdeckels gemäß der ersten Ausführungsform der Erfindung;
- Fig. 3: eine Querschnittsansicht des an einem Gehäuse der elektrischen Fahrzeugachsenvorrichtung befestigten Lagerdeckels gemäß einer zweiten Ausführungsform der Erfindung;
- Fig. 4: ein Ablaufdiagramm eines Verfahrens zum Positionieren des Lagerdeckels zu dem Gehäuse in der elektrischen Fahrzeugachsenvorrichtung für das Kraftfahrzeug gemäß der ersten und zweiten Ausführungsform der Erfindung.

In den Figuren der Zeichnungen bezeichnen gleiche Bezugszeichen gleiche oder funktionsgleiche Elemente, Bauteile oder Komponenten, soweit nichts Gegenteiliges angegeben ist.

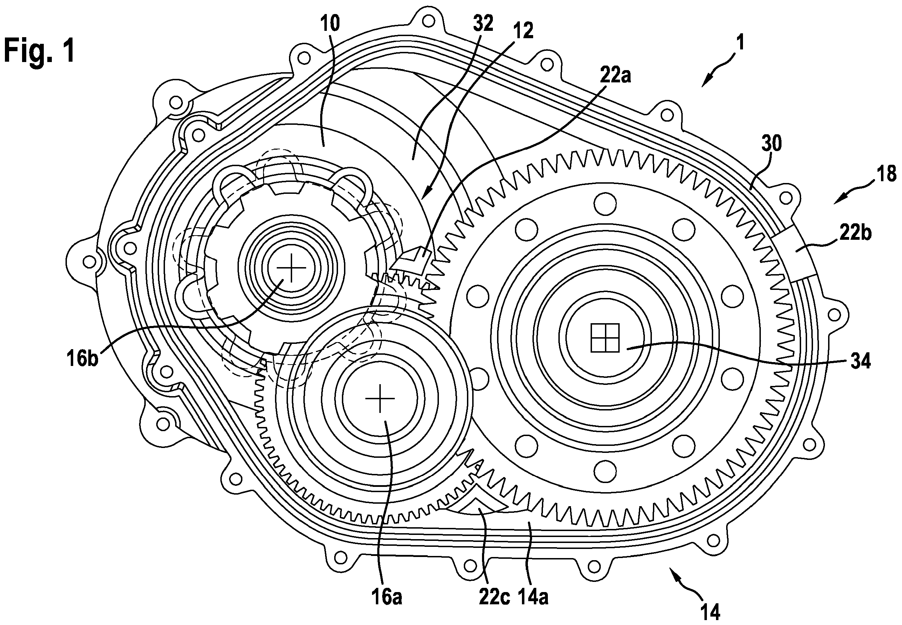

Fig. 1 zeigt eine Seitenansicht einer elektrischen Fahrzeugachsenvorrichtung mit abgenommenem Lagerdeckel gemäß einer bevorzugten Ausführungsform der Erfindung.

Die elektrische Fahrzeugachsenvorrichtung 1 weist eine elektrische Maschine 10 auf. Ferner weist die elektrische Fahrzeugachsenvorrichtung 10 ein mit der elektrischen Maschine 10 gekoppeltes Getriebe 12 auf. Ferner weist die elektrische Fahrzeugachsenvorrichtung 1 ein Gehäuse 14 auf, in welchem zumindest die elektrische Maschine 10 und das Getriebe 12 aufgenommen sind. Das Getriebe 12 weist eine Mehrzahl von Lagern 16a, 16b auf.

Die Mehrzahl von Lagern 16a, 16b sind durch eine Positioniereinrichtung 18 zu einem an dem Gehäuse 14 befestigten (in Fig. 1 nicht gezeigten) Lagerdeckel positionierbar. Die Positioniereinrichtung 18 weist an einer Oberfläche 14a des Gehäuses 14 ausgebildete, erste dreidimensionale Fügebereiche 22a, 22b, 22c und an einer Innenseite des (in Fig. 1 nicht gezeigten) Lagerdeckels ausgebildete, zweite dreidimensionale Fügebereiche auf.

Die ersten dreidimensionalen Fügebereiche 22a, 22b, 22c des Gehäuses 14 und die zweiten dreidimensionalen Fügebereiche des Lagerdeckels sind hierbei formschlüssig zusammenfügbar.

An der Oberfläche 14a des Gehäuses 14 sind hierbei drei dreidimensionale Fügebereiche 22a, 22b, 22c und an der Innenseite des (in Fig. 1 nicht dargestellten) Lagerdeckels ebenfalls drei zweite dreidimensionale Fügebereiche ausgebildet. Ferner sind die an der Oberfläche 14a des Gehäuses 14 ausgebildeten, ersten dreidimensionalen Fügebereiche 22a, 22b, 22c an einem Gehäuserand 30 und an einer zu der Mehrzahl von Lagern 16a, 16b benachbart angeordneten Gehäusewand 32 angeordnet.

Alternativ können die ersten dreidimensionalen Fügebereiche 22a, 22b, 22c beispielsweise lediglich im Bereich des Gehäuserands 30 oder lediglich bzw. ausschließlich im Bereich der Gehäusewand 32 angeordnet sein. Das Bezugszeichen 34 bezeichnet eine Antriebswelle der elektrischen Fahrzeugachsenvorrichtung 1.

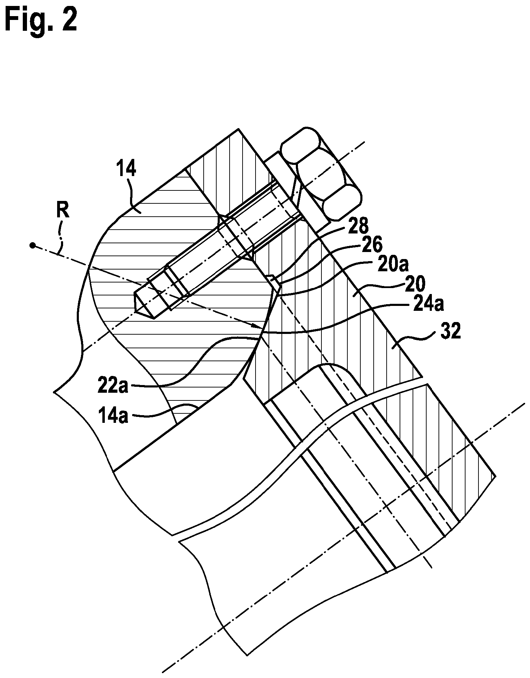

Fig. 2 zeigt eine Querschnittsansicht des an einem Gehäuse der elektrischen Fahrzeugachsenvorrichtung befestigten Lagerdeckels gemäß einer ersten Ausführungsform der Erfindung.

Ein beispielhafter der an der Oberfläche 14a des Gehäuses 14 ausgebildeten ersten dreidimensionalen Fügebereiche 22a ist in der vorliegenden Ausführungsform konvex ausgebildet. Ein beispielhafter der an der Innenseite 20a des Lagerdeckels 20 ausgebildeten zweiten dreidimensionalen Fügebereiche 24a ist in der vorliegenden Ausführungsform konkav ausgebildet und mit dem ersten dreidimensionalen Fügebereich 22a des Gehäuses 14 formschlüssig zusammengefügt.

Ferner ist vorgesehen, dass ein jeweiliger der, an der Oberfläche 14a des Gehäuses 14 ausgebildeten ersten konvex ausgebildeten dreidimensionalen Fügebereiche 22a einen kegeligen Vorsprung 26 aufweist. Ferner ist gemäß der vorliegenden Ausführungsform vorgesehen, dass der an der Innenseite 20a des Lagerdeckels 20 ausgebildete zweite dreidimensionale Fügebereich 24a eine kegelige Aussparung 28 aufweist.

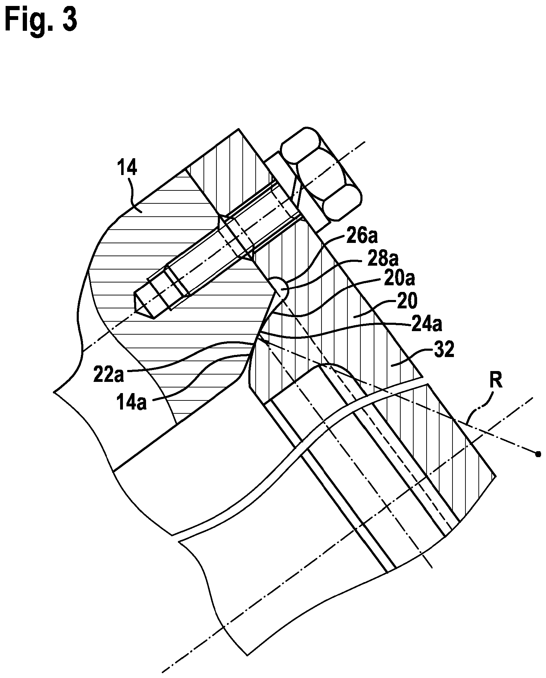

Fig. 3 zeigt eine Querschnittsansicht des an einem Gehäuse der elektrischen Fahrzeugachsenvorrichtung befestigten Lagerdeckels gemäß einer zweiten Ausführungsform der Erfindung.

Erfindungsgemäß ist vorgesehen, dass die an der Oberfläche 14a des Gehäuses 14 ausgebildeten, ersten dreidimensionalen Fügebereiche 22a (von welchen in Fig. 3 einer beispielhaft dargestellt ist) jeweils konkav ausgebildet sind. Ferner ist vorgesehen, dass die an der Innenseite 20a des Lagerdeckels 20 ausgebildeten, zweiten dreidimensionalen Fügebereiche 24a jeweils konvex ausgebildet und mit dem ersten dreidimensionalen Fügebereich 22a des Gehäuses 14 formschlüssig zusammengefügt sind.

Ferner ist vorgesehen, dass ein jeweiliger der, an der Innenseite 20a des Lagerdeckels 20 ausgebildeten ersten konvex ausgebildeten dreidimensionalen Fügebereiche 24a einen kegeligen Vorsprung 26a aufweist. Ferner ist gemäß der vorliegenden Ausführungsform vorgesehen, dass der an der Innenseite 20a des Lagerdeckels 20 ausgebildete zweite dreidimensionale Fügebereich 24a eine kegelige Aussparung 28a aufweist. Die jeweils konvex ausgebildeten zweiten dreidimensionalen Fügebereiche 24a des Lagerdeckels 20 weisen einen Radius R auf.

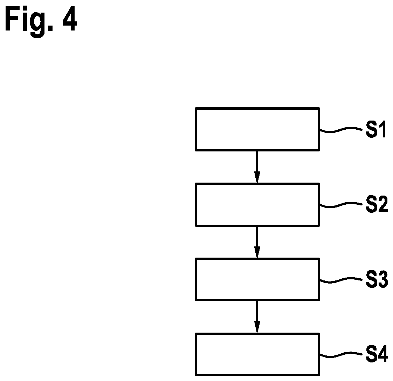

Fig. 4 zeigt ein Ablaufdiagramm eines Verfahrens zum Positionieren des Lagerdeckels zu dem Gehäuse in der elektrischen Fahrzeugachsenvorrichtung für das Kraftfahrzeug gemäß der ersten und zweiten Ausführungsform der Erfindung.

Das Verfahren umfasst ein Bereitstellen S1 einer elektrischen Maschine, einer Leistungselektronik zum Ansteuern der elektrischen Maschine, einem mit der elektrischen Maschine gekoppelten Getriebe und eines Gehäuses, in welchem zumindest die elektrische Maschine und das Getriebe aufgenommen sind.

Das Verfahren umfasst ferner ein Positionieren S2 einer Mehrzahl von Lagern des Getriebes zu einem an dem Getriebe befestigten Lagerdeckel mittels einer Positioniereinrichtung.

Das Verfahren umfasst überdies ein Bereitstellen S3 der Positioniereinrichtung mit an einer Oberfläche des Gehäuses ausgebildeten, ersten dreidimensionalen Fügebereichen und an einer Innenseite des Lagerdeckels ausgebildeten, zweiten dreidimensionalen Fügebereichen.

Das Verfahren umfasst überdies ein formschlüssiges Zusammenfügen S4 der ersten dreidimensionalen Fügebereiche des Gehäuses und der zweiten dreidimensionalen Fügebereiche des Lagerdeckels.

Obwohl die vorliegende Erfindung anhand bevorzugter Ausführungsbeispiele vorstehend beschrieben wurde, ist sie nicht darauf beschränkt, sondern auf vielfältige Art und Weise modifizierbar (innerhalb des durch die beigefügten Ansprüche definierten Schutzbereichs).

Beispielsweise können eine Form, Abmessung und/oder eine Beschaffenheit der Komponenten der elektrischen Fahrzeugachsenvorrichtung 1 abgeändert werden.

## Patentansprüche

1. Elektrische Fahrzeugachsenvorrichtung (1) für ein Kraftfahrzeug, mit einer elektrischen Maschine (10), mit einem mit der elektrischen Maschine (10) gekoppelten Getriebe (12) und mit einem Gehäuse (14), in welchem zumindest die elektrische Maschine (10) und das Getriebe (12) aufgenommen sind, wobei das Getriebe (12) eine Mehrzahl von Lagern (16a, 16b) aufweist, welche durch eine Positioniereinrichtung (18) zu einem an dem Gehäuse (14) befestigten Lagerdeckel (20) positioniert sind, wobei die Positioniereinrichtung (18) an einer Oberfläche (14a) des Gehäuses (14) ausgebildete, erste dreidimensionale Fügebereiche (22a, 22b, 22c) und an einer Innenseite (20a) des Lagerdeckels (20) ausgebildete, zweite dreidimensionale Fügebereiche (24a, 24b, 24c) aufweist, wobei die ersten dreidimensionalen Fügebereiche (22a, 22b, 22c) des Gehäuses (14) und die zweiten dreidimensionalen Fügebereiche (24a, 24b, 24c) des Lagerdeckels (20) formschlüssig zusammengefügt sind, **dadurch gekennzeichnet, dass** entweder die an der Oberfläche (14a) des Gehäuses (14) ausgebildeten, ersten dreidimensionalen Fügebereiche (22a, 22b, 22c) jeweils konvex ausgebildet sind und die an der Innenseite (20a) des Lagerdeckels (20) ausgebildeten, zweiten dreidimensionalen Fügebereiche (24a, 24b, 24c) jeweils konkav ausgebildet sind und ein jeweiliger der, an der Oberfläche (14a) des Gehäuses (14) ausgebildeten, ersten konvex ausgebildeten dreidimensionalen Fügebereiche (22a, 22b, 22c) einen kegeligen Vorsprung (26) aufweist; oder dass die an der Oberfläche (14a) des Gehäuses (14) ausgebildeten, ersten dreidimensionalen Fügebereiche (22a, 22b, 22c) jeweils konkav ausgebildet sind und die an der Innenseite (20a) des Lagerdeckels (20) ausgebildeten, zweiten dreidimensionalen Fügebereiche (24a, 24b, 24c) jeweils konvex ausgebildet sind und ein jeweiliger der, an der Oberfläche (14a) des Gehäuses (14) ausgebildeten, ersten konkav ausgebildeten dreidimensionalen Fügebereiche (22a, 22b, 22c) eine kegelige Aussparung (28) aufweist..

2. Elektrische Fahrzeugachsenvorrichtung nach Anspruch 1, **dadurch gekennzeichnet, dass** zumindest einer der an der Oberfläche (14a) des Gehäuses (14) ausgebildeten ersten dreidimensionalen Fügebereiche (22a, 22b, 22c) konvex und zumindest ein weiterer der an der Oberfläche (14a) des Gehäuses (14) ausgebildeten ersten dreidimensionalen Fügebereiche (22a, 22b, 22c) konkav ausgebildet ist.

3. Elektrische Fahrzeugachsenvorrichtung nach Anspruch 2, **dadurch gekennzeichnet, dass** zumindest einer der an der Innenseite (20a) des Lagerdeckels (20) ausgebildeten zweiten dreidimensionalen Fügebereiche (24a, 24b, 24c) konvex und zumindest ein weiterer der an der Innenseite (20a) des Lagerdeckels (20) ausgebildeten zweiten dreidimensionalen Fügebereiche (24a, 24b, 24c) konkav ausgebildet ist.

4. Elektrische Fahrzeugachsenvorrichtung nach einem der vorhergehenden Ansprüche, **dadurch gekennzeichnet, dass** an der Oberfläche (14a) des Gehäuses (14) drei erste dreidimensionale Fügebereiche (22a, 22b, 22c) und an der Innenseite (20a) des Lagerdeckels (20) drei zweite dreidimensionale Fügebereiche (24a, 24b, 24c) ausgebildet sind.

5. Elektrische Fahrzeugachsenvorrichtung nach einem der Ansprüche 2 bis 4, **dadurch gekennzeichnet, dass** ein jeweiliger der an der Innenseite (20a) des Lagerdeckels (20) ausgebildeten, zweiten konvex ausgebildeten dreidimensionalen Fügebereiche (24a, 24b, 24c) einen kegeligen Vorsprung (26) aufweist und/oder ein jeweiliger der, an der Innenseite (20a) des Lagerdeckels (20) ausgebildeten, zweiten konkav ausgebildeten dreidimensionalen Fügebereiche (24a, 24b, 24c) eine kegelige Aussparung (28) aufweist.

6. Elektrische Fahrzeugachsenvorrichtung nach einem der vorhergehenden Ansprüche, **dadurch gekennzeichnet, dass** die an der Oberfläche (14a) des Gehäuses (14) ausgebildeten, ersten dreidimensionalen Fügebereiche (22a, 22b, 22c) an einem Gehäuserand (30) und/oder einer zu der Mehrzahl von Lagern (16a, 16b) benachbart angeordneten Gehäusewand (32) angeordnet sind.

## Claims

1. Electric vehicle axle device (1) for a motor vehicle, having an electric machine (10), having a transmission (12) coupled to the electric machine (10) and having a housing (14), in which at least the electric machine (10) and the transmission (12) are accommodated, wherein the transmission (12) has a plurality of bearings (16a, 16b), which are positioned by a positioning device (18) in relation to a bearing cover (20) fixed to the housing (14), wherein the positioning device (18) has first three-dimensional joining areas (22a, 22b, 22c) formed on a surface (14a) of the housing (14) and second three-dimensional joining areas (24a, 24b, 24c) formed on an inner side (20a) of the bearing cover (20), wherein the first three-dimensional joining areas (22a, 22b, 22c) of the housing (14) and the second three-dimensional joining areas (24a, 24b, 24c) of the bearing cover (20) are joined together in a form-fitting manner, **characterized in that** either the first three-dimensional joining areas (22a, 22b, 22c) formed on the surface (14a) of the housing (14) are each convex and the second three-dimensional joining areas (24a, 24b, 24c) formed on the inner side (20a) of the bearing cover (20) are each concave and a respective one of the first convex three-dimensional joining areas (22a, 22b, 22c) formed on the surface (14a) of the housing (14) has a conical protrusion (26); or **in that** the first three-dimensional joining areas (22a, 22b, 22c) formed on the surface (14a) of the housing (14) are each concave and the second three-dimensional joining areas (24a, 24b, 24c) formed on the inner side (20a) of the bearing cover (20) are each convex and a respective one of the first concave three-dimensional joining areas (22a, 22b, 22c) formed on the surface (14a) of the housing (14) has a conical recess (28) .

2. Electric vehicle axle device according to Claim 1, **characterized in that** at least one of the first three-dimensional joining areas (22a, 22b, 22c) formed on the surface (14a) of the housing (14) is convex and at least a further one of the first three-dimensional joining areas (22a, 22b, 22c) formed on the surface (14a) of the housing (14) is concave.

3. Electric vehicle axle device according to Claim 2, **characterized in that** at least one of the second three-dimensional joining areas (24a, 24b, 24c) formed on the inner side (20a) of the bearing cover (20) is convex and at least a further one of the second three-dimensional joining areas (24a, 24b, 24c) formed on the inner side (20a) of the bearing cover (20) is concave.

4. Electric vehicle axle device according to one of the preceding claims, **characterized in that** three first three-dimensional joining areas (22a, 22b, 22c) are formed on the surface (14a) of the housing (14) and three second three-dimensional joining areas (24a, 24b, 24c) are formed on the inner side (20a) of the bearing cover (20) .

5. Electric vehicle axle device according to one of Claims 2 to 4, **characterized in that** a respective one of the second convex three-dimensional joining areas (24a, 24b, 24c) formed on the inner side (20a) of the bearing cover (20) has a conical protrusion (26) and/or a respective one of the second concave three-dimensional joining areas (24a, 24b, 24c) formed on the inner side (20a) of the bearing cover (20) has a conical recess (28) .

6. Electric vehicle axle device according to one of the preceding claims, **characterized in that** the first three-dimensional joining areas (22a, 22b, 22c) formed on the surface (14a) of the housing (14) are arranged on a housing edge (30) and/or on a housing wall (32) arranged adjacent to the plurality of bearings (16a, 16b).

## Revendications

1. Dispositif d'essieu de véhicule électrique (1) pour un véhicule automobile, avec une machine électrique (10), avec une transmission (12) couplée à la machine électrique (10) et avec un boîtier (14) dans lequel sont logées au moins la machine électrique (10) et la transmission (12), la transmission (12) présentant une pluralité de paliers (16a, 16b), qui sont positionnés par un appareil de positionnement (18) par rapport à un couvercle de palier (20) fixé au boîtier (14), l'appareil de positionnement (18) présentant des premières zones de joint tridimensionnelles (22a, 22b, 22c) réalisées sur une surface (14a) du boîtier (14) et des deuxièmes zones de joint tridimensionnelles (24a, 24b, 24c) réalisées sur un côté intérieur (20a) du couvercle de palier (20), 24c), les premières zones de joint tridimensionnelles (22a, 22b, 22c) du boîtier (14) et les deuxièmes zones de joint tridimensionnelles (24a, 24b, 24c) du couvercle de palier (20) étant assemblées par complémentarité de forme, **caractérisé en ce que** soit les premières zones de joint tridimensionnelles (22a, 22b, 22c) réalisées sur la surface (14a) du boîtier (14) sont respectivement réalisées sous forme convexe et les deuxièmes zones de joint tridimensionnelles (24a, 24b, 24c) réalisées sur le côté intérieur (20a) du couvercle de palier (20) sont respectivement réalisées sous forme concave et l'une respective des premières zones de joint tridimensionnelles réalisées sous forme convexe (22a, 22b, 22c) réalisées sur la surface (14a) du boîtier (14) présente une saillie conique (26) ; soit **en ce que** les premières zones de joint tridimensionnelles (22a, 22b, 22c) réalisées sur la surface (14a) du boîtier (14) sont respectivement réalisées sous forme concave et les deuxièmes zones de joint tridimensionnelles (24a, 24b, 24c) réalisées sur le côté intérieur (20a) du couvercle de palier (20) sont respectivement réalisées sous forme convexe et l'une respective des premières zones de joint tridimensionnelles réalisées sous forme concave (22a, 22b, 22c) réalisées sur la surface (14a) du boîtier (14) présente un évidement conique (28).

2. Dispositif d'essieu de véhicule électrique selon la revendication 1, **caractérisé en ce qu'**au moins une des premières zones de joint tridimensionnelles (22a, 22b, 22c) réalisées sur la surface (14a) du boîtier (14) est réalisée sous forme convexe et au moins une autre des premières zones de joint tridimensionnelles (22a, 22b, 22c) réalisées sur la surface (14a) du boîtier (14) est réalisée sous forme concave.

3. Dispositif d'essieu de véhicule électrique selon la revendication 2, **caractérisé en ce qu'**au moins une des deuxièmes zones de joint tridimensionnelles (24a, 24b, 24c) réalisées sur le côté intérieur (20a) du couvercle de palier (20) est réalisée sous forme convexe et au moins une autre des deuxièmes zones de joint tridimensionnelles (24a, 24b, 24c) réalisées sur le côté intérieur (20a) du couvercle de palier (20) est réalisée sous forme concave.

4. Dispositif d'essieu de véhicule électrique selon l'une quelconque des revendications précédentes, **caractérisé en ce que** trois premières zones de joint tridimensionnelles (22a, 22b, 22c) sont réalisées sur la surface (14a) du boîtier (14) et trois deuxièmes zones de joint tridimensionnelles (24a, 24b, 24c) sont réalisées sur le côté intérieur (20a) du couvercle de palier (20).

5. Dispositif d'essieu de véhicule électrique selon l'une quelconque des revendications 2 à 4, **caractérisé en ce que** l'une respective des deuxièmes zones de joint tridimensionnelles réalisées sous forme convexe (24a, 24b, 24c) réalisées sur le côté intérieur (20a) du couvercle de palier (20) présente une saillie conique (26) et/ou l'une respective des deuxièmes zones de joint tridimensionnelles réalisées sous forme concave (24a, 24b, 24c) réalisées sur le côté intérieur (20a) du couvercle de palier (20) présente un évidement conique (28) .

6. Dispositif d'essieu de véhicule électrique selon l'une quelconque des revendications précédentes, **caractérisé en ce que** les premières zones de joint tridimensionnelles (22a, 22b, 22c) réalisées sur la surface (14a) du boîtier (14) sont agencées sur un bord de boîtier (30) et/ou une paroi de boîtier (32) agencée au voisinage de la pluralité de paliers (16a, 16b).
